# EUROPEAN PATENT SPECIFICATION

(11) **EP 4 486 699 B1**
(45) Date of publication and mention of the grant of the patent: **06.05.2026**
(21) Application number: 23711484.8
(22) Date of filing: 16.03.2023
(51) Int. Cl.: C01D 5/00, C01G 53/00

(54) **PROCESS FOR MAKING CRYSTALLINE SODIUM SULFATE**
VERFAHREN ZUM HERSTELLEN VON KRISTALLINEM NATRIUMSULFAT
PROCÉDÉ DE FABRICATION DE SULFATE DE SODIUM CRISTALLIN

(30) Priority: 23.03.2022 EP 22163695
(43) Date of publication of application: 08.01.2025
(73) Proprietor: BASF SE, 67056 Ludwigshafen am Rhein (DE)
(72) Inventor: RYLL, Thomas Michael, 67056 Ludwigshafen am Rhein (DE); VOLKOV, Aleksei, 67056 Ludwigshafen am Rhein (DE); RAULS, Matthias, 66424 Homburg (DE)
(74) Representative: BASF IP Association
(86) International application number: PCT/EP2023/056796
(87) International publication number: WO 2023/180180

(56) References cited:
- WO-A1-2019/117411
- CN-A- 106 957 124
- CN-A- 112 299 638
- CN-B- 109 319 998
- CN-B- 109 576 494
- US-A- 6 001 246

## Description

The present invention is directed towards a process for making crystalline sodium sulfate, said process comprising the steps of
(a) combining an aqueous solution containing sulfates of nickel and at least one metal selected from cobalt and manganese with an aqueous solution of sodium hydroxide or sodium carbonate, respectively, in a stoichiometric ratio of about 1 : 2 or 1 : 1, respectively, in the presence of ammonia or a salt of ammonia,
(b) removing the precipitated hydroxide or carbonate of nickel and the at least one metal selected from cobalt and manganese by filtration,
(c) removing the ammonia from the filtrate from step (b) by stripping in a distillation column,
(d) passing the remaining liquid phase through a porous membrane, thereby obtaining a permeate, and
(e) removing water from the permeate from step (d) by an evaporation method.

Alkali metal sulfates like sodium sulfate are useful products in many applications, for example, they may serve as builders in laundry detergents. However, in order to be a suitable builder such sulfates need to fulfil several criteria. They must not contain critical impurities. They need to be colorless and should not offer an unpleasant odor to the laundry detergent. Furthermore, they must not be a cost factor for the laundry detergent.

Major quantities of sodium sulfate are obtained from mineral resources, for example from mirabilite. However, alternative methods are interesting as well.

In CN 112299638 A1, a method is described for obtaining sodium sulfate from a filtrate of a ternary precursor precipitated from sulfates with sodium hydroxide. The resulting sodium sulfate may still not be suitable for builders or other home care applications.

In WO 2019/117411, a process for working up filtrates is described where ammonia, a commonly used complexing agent in precursor manufacture, is recovered as ammonium sulfate.

In US 6,001,246, a process is disclosed wherein sodium sulfate is produced from wastewater. The sodium sulfate contains about 0.200% by weight of NaCl.

It was the objective of the present invention to provide a process for making sodium sulfate from a cheap source that fulfils the above requirements of purity, free from smell, and colorless, without having the disadvantages of the prior art methods. It was further an objective of the present invention to provide a set-up in which the respective process may be carried out.

Accordingly, process as defined at the outset has been found, hereinafter also referred to as inventive process. The inventive process comprises the steps (a) to (e), hereinafter also referred to as step (a) or in brief as (a), step (b)or in brief as (b), etcetera. The inventive process will be described in more detail below.

Step (a) includes combining an aqueous solution containing sulfates of nickel and at least one metal selected from cobalt and manganese with an aqueous solution of sodium hydroxide or sodium carbonate in a stoichiometric ratio of about 1 : 2 or 1 : 1, respectively, in the presence of ammonia or a salt of ammonia.

The relative amounts of nickel and the at least one metal selected from cobalt and manganese may be selected in wide ranges. Nickel may amount from 25 to 97 mol-% of the metals other than alkali metal. Cobalt may be absent or present and may then amount from 1 to 33 mol-%, preferably 2 to 20 mol-% of the metals other than alkali metal. Manganese may be absent or present and may then amount from 1 to 75 mol-% preferably 2 to 68 mol-% of the metals other than alkali metal. Further metals that may be present in step (a) are magnesium or aluminum, for example up to 2 mol-% of magnesium, or up to 10 mol-% of aluminum. When aluminum is present in amounts of 3 to 10 mol-%, it is preferred that cobalt is present as well.

In the course of step (a), a precipitation is performed.

In one embodiment of the present invention, at least one of aluminum and magnesium is included in the precipitation in step (a) by introducing at least one of MgSO₄, Al₂(SO₄)₃, NaAl(OH)₄, NaAl(SO₄)₂, and KAl(SO₄)₂.

Sodium hydroxide is able to absorb carbon dioxide from air, and frequently, technical grade sodium hydroxide contains some sodium carbonate, for example up to 0.5 by weight, preferably 0.1 to 0.4% by weight. By applying such technical grade sodium hydroxide, mixed hydroxides/carbonates are precipitated.

In one embodiment of the present invention, in step (a), the stoichiometric ratio of sodium hydroxide to the sum of nickel and other metals is about 2:1. The term "about" in this context refers to ± 2 mol-% deviation of the hydroxide content to the ratio that would correspond to an exact stoichiometric ratio. In case aluminum is present, the amount of hydroxide may vary, also depending on the nature of the source of aluminum.

In one embodiment of the present invention, the stoichiometric ratio of sodium carbonate to the sum of nickel and other metals is about 1:1. The term "about" in this context refers to ± 2 mol-% deviation of the carbonate content to the ratio that would correspond to an exact stoichiometric ratio.

Complexing agents are used in step (a), and the economically most favorable complexing agent is ammonia which may be used directly or as ammonium salt, for example as ammonium sulfate. Upon neutralization with hydroxide, ammonia is formed.

A preferred molar ratio of ammonia to metals other than alkali metal is in the range of from 1:10 to 1:1, more preferred from 1:5 to 1:2.

By combining aqueous solution containing sulfates of nickel and at least one metal selected from cobalt and manganese with an aqueous solution of sodium hydroxide or sodium carbonate, in the presence of ammonia or a salt of ammonia, a mixed metal hydroxide or mixed metal carbonate is precipitated. Said mixed metal hydroxide or mixed metal carbonate is suspended (slurried in a continuous phase that contains sodium sulfate, and traces of nickel and further transition metal salts or excess of sodium hydroxide and ammonia.

In one embodiment of the present invention, step (a) is carried out at a temperature in the range of from 15 to 80°C, preferably 40 to 70°C.

Step (a) is preferably carried out together with a mixing operation, for example stirring.

In step (a), a slurry of precipitated mixed metal hydroxide or carbonate of nickel and the at least one metal selected from cobalt and manganese is obtained. Said mixed metal hydroxide or carbonate may contain further metals, for example magnesium or aluminum.

In one embodiment of the present invention, step (a) is carried out at a pH value in the range of from 10 to 13, preferably 11.1 to 12.5. The pH value is determined at 23°C and refers to the continuous phase.

In one embodiment of the present invention, the concentration of mixed metal hydroxide or mixed metal carbonate may be enhanced by performing step (a) in a stirred vessel that is connected to a clarifier, for example lamellar clarifier. Through such clarifier, continuous phase may be removed from the stirred vessel. The continuous phase so removed may be combined with the filtrate from step (b).

In step (b), the precipitated hydroxide or carbonate of nickel and the at least one metal selected from cobalt and manganese is removed by filtration. Said filtration may be carried out batch-wise or continuously, for example with a filter, especially with a filter press or with a belt filter, by suction filtration or with a centrifuge. A filter press is preferred.

In embodiments where a centrifuge is used, a supernatant and a precipitate are obtained. In the context of the present invention, in subsequent steps the supernatant assumes the role of the filtrate and the precipitate assumes the role of the filter cake without making mention separately.

By filtration, a filter cake is obtained and a filtrate. The filter cake is preferably washed with water or with an aqueous solution of sodium hydroxide or carbonate, in accordance with step (a). After washing, the wash water may then be combined with the filtrate from step (b).

In one embodiment of (b), filter cake from step (b) is pre-dried by blowing a gas, for example nitrogen or air, through the filter cake. The water so removed may be combined with the filtrate.

In one embodiment of step (b), the pH value of the filtrate has a pH value in the range of from 10 to 13.5, preferably from 11.1 to 12.5.

In step (c), the ammonia is removed from the filtrate from step (b), without or preferably with the wash water, by stripping in a distillation column or fractionating column, both expressions being used interchangeably in the context of the present invention.

While steps (a) and (b) may be carried out continuously or batch-wise, the distillation column or fractionating column in step (c) is preferably operated continuously and in the steady state.

In step (c), ammonia together with water is the lower boiling fraction and aqueous solution containing the sodium sulfate is the higher boiling fraction. Preferably, the concentration of the ammonia in the water, lower boiling fraction, is in the range of from zero to 10 ppm, preferably 1 to 5 ppm.

All data given in ppm refers to ppm by weight.

In one embodiment of the present invention, said distillation column or fractionating column in step (c) has in the range of from 10 to 50 theoretical plates (theoretical trays).

Said distillation column or fractionating column in step (c) may have plates or trays that bear bubble caps.

In one embodiment of the present invention, said distillation column in step (c) is operated at a temperature in the range of from 80 to 120°C.

In one embodiment of the present invention, said distillation column in step (c) is operated at a pressure in the range of from 10 mbar to 1.5 bar, ambient pressure being preferred.

The high-boiling fraction usually contains small amounts of precipitates. Such precipitate may contain nickel hydroxide - or carbonate, as the case may be - and, depending on the metals used in step (a), at least one of cobalt or manganese.

The low-boiling (or "volatile") fraction from step (c) mainly contains ammonia which then is dissolved (washed out) with water and reused in step (a).

The high-boiling fraction from step (c) or liquid phase is then subjected to step (d).

Step (d) includes passing the high-boiling fraction from step (c), hereinafter also referred to as "the remaining liquid phase" through a porous membrane, thereby obtaining a permeate. Said membrane is preferably nano-porous.

Said porous membrane may be composed of a polymer, for example: PES, PTFE, PVDF, PE, PP, each having average pore diameters from 5 nm to 2 or even up to 3 µm. In another embodiment, porous membrane may be made from a ceramic material such as Al₂O₃, TiO₂, ZrO₂, SiC or sinter metals. More preferable ceramic membranes are made from Al₂O₃.

Said polymeric or ceramic membrane preferably has pores with an average diameter from 2 nanometers to 3 µm, preferably from 20 to 400 nm and more preferably from 50 to 100 nm. To enhance the abrasion resistance of ceramic membranes, a porous membrane comprising two or three membrane layers can be used, for example 800 nm, then 400 nm and finally 100 nm, or 400 nm, then 200 nm and finally 100 nm and more preferable 400 nm, 200 nm and 50 nm.

In one embodiment of the present invention, step (d) is operated at a temperature in the range of from 20 to 95°C, preferably 50 to 70°C.

In one embodiment of the present invention, step (d) is operated at a pressure in the range of from 2 to 6 bar (abs), preferably 2 to 5 bar (abs), and the high-boiling fraction from step (c) is pressed through the porous membrane.

In another embodiment of the present invention, step (d) is operated with a submerged pressure, for example up to 250 mbar, and the high-boiling fraction from step (c) is sucked through the porous membrane.

From step (d), a permeate is obtained, hereinafter also referred to as brine. Said brine preferably contains less than a total of 10 ppm of metals elected from nickel, cobalt and manganese, preferably below 0.1 ppm, more preferably below detection level. Said brine is transparent for the naked eye, and colorless. The concentration of sodium sulfate is preferably in the range of from 5 to 20 % by weight.

In one embodiment of the present invention, the inventive process comprises an additional step (d'): a reverse osmosis is performed. Said reverse osmosis may be performed by passing the permeate from step (d) along a porous membrane, for example with nanopores with pore widths (pore width of 2 nm or less), under a pressure of up to 120 bar. The temperature in the reverse osmosis step is preferably in the range of from 20 to 35C. By a reverse osmosis, a permeate is obtained that is almost pure water. In addition, a retentate may comprise up to 160g/l sodium sulfate, which corresponds to up to 15 wt.-%. The reverse osmosis serves to remove water from the filtrate and to increase the concentration of sodium sulfate.

In step (e), sodium sulfate from the permeate of step (d) or - if applicable - from the retentate of step (d') is solidified by an evaporation method, for example in a spray tower or in an evaporation crystallizer.

Evaporation crystallizers are known *per se.* In one embodiment of the present invention, the evaporation crystallization is performed by one of the following methods:
- falling film evaporation or
- forced circulation crystallization.

In one embodiment of the present invention, the crystals of Na₂SO₄ so obtained are removed by centrifugation or a filtration, preferably by centrifugation. Drying may be performed in a fluidized bed.

Preferably, prior to step (e), the pH value of the filtrate from step (d) or - if applicable - from the retentate of step (d') - is adjusted to 6.5 to 9.5 prior to step (e) with sulfuric acid, more preferably from 6.8 to 8.0. The closer the pH value is to 10 the less corrosion problems are faced in step (e). However, sodium sulfate containing a lot of strong base such as NaOH is not appreciated when to be used as builder.

In a spray tower, the brine is sprayed to form droplets from which the water evaporates. A sodium sulfate powder is formed that can be collected. By selecting temperature and pressure, the droplet size and thus the particle diameter of the resulting sodium sulfate may be steered.

Spraying is being performed through one or more nozzles per spray tower. Suitable nozzles are, for example, high-pressure rotary drum atomizers, rotary atomizers, three-fluid nozzles, single-fluid nozzles and two-fluid nozzles, single-fluid nozzles and two-fluid nozzles being preferred. The first fluid is the brine from step (d), the second fluid is compressed hot gas, also referred to as hot gas inlet stream, for example with a pressure of 1.1 to 7 bar. The hot gas inlet stream may have a temperature in the range of from at least 125°C to 250°C, preferably 150 to 250°C, even more preferably 160 to 220°C.

In one embodiment of the present invention, a single-effect spray dryer is used. In an alternative embodiment, a multi-effect spray dryer may be used.

In one embodiment of step (e), the brine obtained from step (d) is introduced in the form of droplets. In one embodiment of the present invention, the droplets formed during the spray-drying have an average diameter in the range of from 10 to 200 µm, preferably from 15 to 150 µm.

In one embodiment of the present invention, the off-gas departing the spray tower may have a temperature in the range of from 40 to 140°C, preferably 80 to 110°C but in any way colder than the hot gas stream. Preferably, the temperature of the off-gas departing the drying vessel and the temperature of the solid product present in the drying vessel are identical.

In one embodiment of the present invention, the pressure in the spray tower in step (e) is normal pressure ± 100 mbar, preferably normal pressure ± 20 mbar, for example one mbar less than normal pressure.

In a preferred evaporation crystallizer, the body of the crystallization vessel carries out evaporation and crystallization simultaneously. The process is driven by a heat exchanger in a pumping loop, where steam is being used to heat the circulating solution. Fresh feed of brine enters this loop before passing through the heat exchanger. The heated suspension reenters the crystallization body and releases its heat through evaporation. The resulting increase in concentration results in crystallization taking place. Vapors leaving the crystallizer body are preferably recompressed through MVR fans ("Mechanical vapor recompression") and hence may be used for further driving the operation of the crystallizer. By this particular embodiment, no fresh and costly steam needs to be consumed.

By performing the inventive process, sodium sulfate is obtained that is excellently suited as builder for making laundry detergents. with a whiteness measured by standard reflectivity measurement (e.g., Kett C-100) of more than 85%. Thus, the obtained sodium sulfate has a very good whiteness, and no malodor can be detected. The chloride content is preferably 500 ppm or less, more preferably 50 ppm or less.

Further disclosed is a set-up in which the inventive process may be carried out. Such inventive set-ups comprise various parts:
(A) at least one stirred tank reactor that is connected to a
(B) filter equipment,
(C) a distillation column,
(D) a vessel comprising a ceramic membrane, and
(E) a vessel for removal of water by evaporation, for example an evaporation crystallizer as tubular heat exchanger (E1) or a spray dryer ("spray tower") (E2).

The above parts are connected in a way that a fluid may be moved through them subsequently. That means that a fluid may be moved through the parts in the order (A), (B), (C), (D) and (E). Said fluid may be water that contains sodium sulfate. In part (E), however, solid sodium sulfate and water or a concentrated brine are obtained.

Vessel (E) may be selected from evaporation crystallizers and spray towers.

Porous membranes in part (D) may be selected from polymer membranes and ceramic membranes.

Part (D) may comprise a unit that comprises two or more membranes that are passed by the permeate.

Said set-up may additionally comprise a part (D') with a membrane for reverse osmosis.

### Example

The following set-up is used: a 10-I stirred tank reactor (A.1) with baffles, overflow system, lamellar clarifier, and stirrer, connected to a filter press, (B.1). The filtrate may be transferred to a fractionating column (C.1). The low-boiling fraction is transferred to a first vessel with a porous ceramic filter, (D.1), a reverse osmosis unit (D'.1) and the retentate from there to a crystallizer (E.1) or to a spray dryer (E.2).

### Step (a.1):

### Synthesis of a precursor TM-OH.1

The stirred tank reactor (A.1) was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8.5:1.0:0.5 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped.

Step (b.1): The mixed transition metal (TM) oxyhydroxide precursor was obtained by filtration of the resulting suspension over a filter press (B.1), washing with a 1% by weight NaOH solution , drying at 120°C in air and sieving.

The filtrate from step (b.1) is combined with the mother liquor withdrawn in step (a.1) and the washing water. The combined filtrate so obtained had a pH value of 12.0.

### Step (c.1):

The combined filtrate from step (b.1) is transferred to a fractionating column (C.1). A distillation column with trays that bear bubble caps and 15 theoretical plates serves as fractionating column (C.1). Step (c.1) is operated continuously. The low-boiling fraction is a 15% by weight aqueous solution of ammonia, the "high-boiling fraction" is a slightly turbid aqueous solution of Na₂SO₄ with a pH value of 12.

### Step (d.1)

The slightly turbid solution from step (c.1) is cooled to 50 °C and transferred to a 20-I vessel (D.1) leading to a porous ceramic Al₂O₃ membrane unit: three membranes with average pore diameters 800 nm, then 400 nm and finally 100 nm. A pressure of 3 bar is exerted. A transparent and colorless permeate is obtained.

After step (d.1), sulfuric acid is added to permeate from step (d.1) to adjust the pH value to 7.0.

### Step (d'.1):

The neutralized permeate from step (d.1) is cooled to 25°C, and a reverse osmosis is performed. With a pressure of 100 bar, water is removed from the permeate of step (d'.1), thereby obtaining a permeate of step (d'.1) and a retentate. The retentate is then transferred to step (e.1).

### Step (e.1)

The neutralized transparent and colorless filtrate from step (d.1) is then transferred to a tubular heat exchanger (E.1) that serves as a falling film evaporator. By repeated passage of the solution over the tubular heat exchanger it is heated to 100 to 110°C, and water evaporates. The thus concentrated but still crystal free solution enters a crystallizer unit. Here, the solution is pumped over another heat exchanger where it becomes superheated to 110 to 120°C. On reentering the crystallizer, water evaporates and crystals of Na₂SO₄ precipitate. The suspension is withdrawn from the crystallizer by means of a pump and crystals are separated from the suspension from a laboratory-scale belt filter. Their whiteness is excellent, and they do not have malodor.

### Step (e.2)

The neutralized transparent and colorless filtrate from step (d.1) is then transferred to a laboratory spray dryer, single-effect type, through a spray nozzle. As gas for the nozzle, air used. A fog is formed. The spray tower is operated in a co-current mode with respect to gas flow and the fog. The gas temperature is 200°C. The filtrate is introduced through the nozzle with a pressure of 2500 kPa. A white odorless Na₂SO₄ powder, average particle diameter 10 µm, is obtained.

The nickel content of the Na₂SO₄ is in each case below detection level.

## Claims

1. Process for making crystalline sodium sulfate, said process comprising the steps of
(a) combining an aqueous solution containing sulfates of nickel and at least one metal selected from cobalt and manganese with an aqueous solution of sodium hydroxide or sodium carbonate in a stoichiometric ratio of about 1 : 2 or 1 : 1, respectively, in the presence of ammonia or a salt of ammonia,
(b) removing the precipitated hydroxide or carbonate of nickel and the at least one metal selected from cobalt and manganese by filtration,
(c) removing the ammonia from the filtrate from step (b) by stripping in a distillation column,
(d) passing the remaining liquid phase through a porous membrane, thereby obtaining a permeate, and
(e) removing water from the permeate from step (d) by an evaporation method.

2. Process according to claim 1 wherein the filtrate in step (c) has a pH value in the range of from 10 to 13.

3. Process according to claim 1 or 2 wherein the evaporation method in step (e) is selected from spray drying and evaporation crystallization.

4. Process according to any of the preceding claims wherein the chloride content of the filtrate of the sulfate after step (d) is in the range of from zero to 10 ppm by weight, referring to the filtrate.

5. Process according to any of the preceding claims wherein in step (a), additionally at least one of aluminum and magnesium is included in the precipitation by introducing at least one of MgSO₄, Al₂(SO₄)₃, NaAl(OH)₄, NaAl(SO₄)₂, and KAl(SO₄)₂.

6. Process according to any of the preceding claims wherein in step (d), a pressure of up to 5 atm is used.

7. Process according to any of the preceding claims wherein between steps (d) and (e) a reverse osmosis (d') is performed.

8. Process according to any of the preceding claims wherein the pH value of the permeate from step (d) or the retentate from step (d'), if applicable, is adjusted to 6.5 to 9.5 prior to step (e) with sulfuric acid.

## Patentansprüche

1. Verfahren zur Herstellung kristalliner Natriumsulfate, wobei der Prozess die Schritte von
(a) indem eine wässrige Lösung mit Sulfaten aus Nickel und mindestens einem Metall aus Kobalt und Mangan mit einer wässrigen Lösung aus Natriumhydroxid oder Natriumcarbonat in einem stöchiometrischen Verhältnis von etwa 1 : 2 bzw. 1 : 1 in Anwesenheit von Ammoniak oder einem Ammoniaksalz kombiniert wird,
(b) wobei das ausgefällte Hydroxid oder Carbonat aus Nickel sowie mindestens ein Metall, das durch Filtration aus Kobalt und Mangan ausgewählt wurde, entfernt wird,
(c) Entfernen des Ammoniaks aus dem Filtrat aus Schritt (b) durch in einer Destillationssäule,
(d) die verbleibende Flüssigkeitsphase durch eine poröse Membran zu leiten, wodurch ein Permeat entsteht, und
(e) Entfernen des Wassers aus dem Permeat ab Schritt (d) mittels einer Verdunstungsmethode.

2. Prozess gemäß Anspruch 1, wobei das Filtrat in Schritt (c) einen pH-Wert im Bereich von 10 bis 13 hat.

3. Prozess gemäß Anspruch 1 oder 2, wobei die Verdampfungsmethode in Schritt (e) aus Sprühtrocknung und Verdampfungskristallisation ausgewählt wird.

4. Prozess gemäß einer der vorangegangenen Aussagen, wobei der Chloridgehalt des Sulfatfiltrats nach Schritt (d) im Bereich von 0 bis 10 ppm nach Gewicht liegt, was sich auf das Filtrat bezieht.

5. Prozess gemäß einer der vorangegangenen Ansprüche, wobei in Schritt (a) zusätzlich mindestens eine Mischung aus Aluminium und Magnesium in die Niederschlagung einbezogen wird, indem mindestens eines von MgSO₄, Al₂(SO₄)₃, NaAl(OH)₄, NaAl(SO₄)₂ und KAl(SO₄)₂ eingesetzt wird.

6. Verfahren gemäß einer der vorangegangenen Ansprüche, bei denen im Schritt (d) ein Druck von bis zu 5 atm angewendet wird.

7. Prozess gemäß einer der vorangegangenen Ansprüche, bei denen zwischen den Schritten (d) und (e) eine Umkehrosmose (d') durchgeführt wird.

8. Prozess gemäß einer der vorangegangenen Ansprüche, bei denen der pH-Wert des Permeats aus Schritt (d) oder gegebenenfalls des Retentats aus Schritt (d') vor Schritt (e) mit Schwefelsäure auf 6,5 bis 9,5 angepasst wird.

## Revendications

1. Procédé de fabrication du sulfate de sodium cristallin, ce procédé comprenant les étapes de
(a) combinant une solution aqueuse contenant des sulfates de nickel et au moins un métal sélectionné à partir de cobalt et de manganèse avec une solution aqueuse d'hydroxyde ou de carbonate de sodium dans un ratio stœchiométrique d'environ 1 : 2 ou 1 : 1, respectivement, en présence d'ammoniac ou d'un sel d'ammoniac,
(b) en retirant l'hydroxyde ou carbonate précipité du nickel ainsi que l'au moins un métal sélectionné à partir du cobalt et du manganèse par filtration,
(c) retirer l'ammoniac du filtrat à l'étape (b) en décapant dans une colonne de distillation,
(d) faisant passer la phase liquide restante à travers une membrane poreuse, obtenant ainsi un perméat, et
(e) Retirer l'eau du perméat à l'étape (d) par une méthode d'évaporation.

2. Procédé selon la revendication 1, où le filtrat à l'étape (c) a une valeur de pH comprise entre 10 et 13.

3. Procédé selon la revendication 1 ou 2, où la méthode d'évaporation à l'étape (e) est choisie entre le séchage par pulvérisation et la cristallisation par évaporation.

4. Procédé selon l'une des affirmations précédentes où la teneur en chlorure du filtrat du sulfate après l'étape (d) est comprise entre zéro et 10 ppm en poids, en référence au filtrat.

5. Procédé selon l'une des affirmations précédentes où, à l'étape (a), au moins un contenant d'aluminium et de magnésium est inclus dans la précipitation en introduisant au moins un de MgSO₄, Al₂(SO₄)₃, NaAl(OH)₄, NaAl(SO₄)₂, et KAl(SO₄)₂.

6. Processus selon l'une des affirmations précédentes où, à l'étape (d), une pression allant jusqu'à 5 atm est utilisée.

7. Processus selon l'une des affirmations précédentes où, entre les étapes (d) et (e), une osmose inverse (d') est effectuée.

8. Le procédé selon l'une des affirmations précédentes où la valeur de pH du perméat de l'étape (d) ou du rétentat de l'étape (d'), le cas échéant, est ajustée à 6,5 à 9,5 avant l'étape (e) avec de l'acide sulfurique.
